# EUROPÄISCHE PATENTSCHRIFT

(11) **EP 0 778 737 B1**
(45) Veröffentlichungstag und Bekanntmachung des Hinweises auf die Patenterteilung: **17.06.1998**
(21) Anmeldenummer: 95930494.0
(22) Anmeldetag: 17.08.1995
(51) Int. Cl.: A23L 2/38, A23L 2/56, A23L 2/60, A23L 2/68

(54) **ERFRISCHUNGSGETRÄNK**
REFRESHING BEVERAGE
BOISSON RAFRAICHISSANTE

(30) Priorität: 01.09.1994 DE 4431178
(43) Veröffentlichungstag der Anmeldung: 18.06.1997
(73) Patentinhaber: Solke, geb. Ortmann, Sieglinde, 32049 Herford (DE)
(72) Erfinder: Solke, Gerhard, 32049 Herford (DE)
(74) Vertreter: Zellentin, Rüdiger
(86) Internationale Anmeldenummer: EP9503287
(87) Internationale Veröffentlichungsnummer: WO9606538

(56) Entgegenhaltungen:
- EP-A- 0 185 117
- EP-A- 0 205 634
- DE-A- 3 115 348
- J.E.F.REYNOLDS ET AL. 'MARTINDALE The Extra Pharmacopoeia,Twenty-eighth Edition' 1982 , THE PHARMACEUTICAL PRESS , LONDON siehe Seite 404 - Seite 405

## Beschreibung

Die Erfindung betrifft ein neues Erfrischungsgetränk, das nicht nur eine erfrischende und belebende Wirkung, sondern auch im Falle des Trinkens nach Alkoholgenuß einen beschleunigten Abbau des Blutalkoholspiegels oder im Falle des Trinkens unmittelbar vor Alkoholgenuß das Ansteigen des Blutalkoholspiegels auf geringere Werte als ohne dieses Getränk bewirkt.

Aus der EP-A-0 205 634 und der fast identischen DE-A-31 15 348 ist ein Fructose, Vitamin C, Chinin und/oder deren Austauschstoffe enthaltendes Getränk mit alkoholabbauender Wirkung bekannt. Aus der EP-A-0 205 634 ist es ferner bekannt, dem Getränk zusätzlich verträgliche Mineralstoffe beizugeben. Bei den bekannten Getränken soll der Fructosegehalt und der Gehalt an Vitamin C hoch genug sein, damit eine den Alkoholabbau fördernde Wirkung entfaltet wird. Der Gehalt an Fructose sollte pro Liter 40 bis 400 g, bevorzugt 120 bis 320 g, insbesondere 180 bis 290 g und der Gehalt an Vitamin C sinnvollerweise 0,4 bis 4 g, bevorzugt 1,5 bis 3 g betragen. Schließlich soll das Getränk 20 bis 80 mg, bevorzugt 46 bis 55 mg Chinin enthalten. Es wird durch Mischen der Substanzen mit kohlesäurehaltigem oder kohlensäurefreiem Wasser hergestellt.

Aufgabe der Erfindung ist es ein Getränk mit alkoholabbauender Wirkung mit geringeren Mengen der Mischsubstanzen anzugeben.

Diese Aufgabe wird durch das im Anspruch 1 in seiner Zusammensetzung wiedergegebene Erfrischungsgetränk gelöst.

Eine vorzugsweise Zusammensetzung ist dem Anspruch 2 zu entnehmen. Weitere vorzugsweisen Zusammensetzungen der Erfindung sind den weiteren Unteransprüchen zu entnehmen.

Das erfindungsgemäße Erfrischungsgetränk wird vorzugsweise in einer Menge von 0,33 l abgefüllt. Es besteht aus einem Trinkwasser oder einem stillen oder kohlesäurehaltigen Mineralwasser, dem auf 0,33 l 20 - 70 g Fructose, vorzugsweise 44 g, 10 - 23 mg Ascorbinsäure, vorzusgweise 23 mg, 0,1 - 10 g Aromastoffe, vorzugsweise 5 g, 0,1 - 7 g Zitronensäure und 0,1 - 6 mg Chinin, vorzugsweise 4 mg zugesetzt sind.

Als Aromastoffe werden vorzugsweise natürliche Aromastoffe, wie Grapefruit, Zitrone, Orange und andere Früchte allein oder in Mischung verwendet.

Als Zironensäure wird ebenfalls vorzugsweise eine natürliche Zitronensäure verwendet. Es kann ein unter dem Handelsnamen Zitro S bekanntes Produkt verwendet werden.

## Patentansprüche

1. Erfrischungsgetränk, das zur Senkung des Blutalkoholspiegels in einer Menge von 0.33 l eines Wassers neben
20 - 70 g Fructose und
10 - 23 mg Ascorbinsäure auch
0.1 - 10 g Aromastoffe und/oder
0,1 - 7 g Zitronensäure und/oder
0,1 - 6mg Chinin
enthält.

2. Erfrischungsgetränk nach Anspruch 1,
dadurch gekennzeichnet, daß
0,33 l Wasser
44 g Fructose
23 mg Ascorbinsäure
5 g Aromastoffe
1,7 g Zitronensäure und
4 mg Chinin
zugesetzt sind.

3. Erfrischungsgetränk nach Anspruch 1 oder 2,
dadurch gekennzeichnet, daß
das Wasser ein stilles oder kohlensäurehaltiges Mineralwasser ist.

4. Erfrischungsgetränk nach einem der Ansprüche 1 bis 3,
dadurch gekennzeichnet, daß
es als Aromastoffe natürliche Aromastoffe wie Grapefruit, Zitrone, Orange allein oder in Mischung enthält.

5. Erfrischungsgetränk nach einem der Ansprüche 1 bis 4,
dadurch gekennzeichnet, daß
es als Zitronensäure eine natürliche Zitronensäure enthält.

## Claims

1. A refreshing drink which, to reduce the blood alcohol level, contains in a quantity of 0.33 l of a water in addition to
20 - 70 g fructose and
10 - 23 mg Ascorbic acid also
0.1 - 10 g aromatic substances and/or
0.1 - 7 g citric acid and/or
0.1 - 6 mg quinine.

2. A refreshing drink according to Claim 1, characterised in that
0.33 l water
44 g fructose
23 mg ascorbic acid
5 g aromatic substances
1.7 g citric acid and
4 mg quinine
are added.

3. A refreshing drink according to Claim 1 or 2, characterised in that the water is a still or a carbonated mineral water.

4. A refreshing drink according to one of Claims 1 to 3, characterised in that as aromatic substances it contains natural aromatic substances such as grapefruit, citron, orange alone or in mixture.

5. A refreshing drink according to one of Claims 1 to 4, characterised in that as a citric acid, it contains a natural citric acid.

## Revendications

1. Boisson rafraîchissante, contenant, afin de faire baisser le taux d'alcool dans le sang, dans une quantité de 0,33 l d'une eau
20 à 70 g de fructose et
10 à 23 mg d'acide ascorbique, ainsi que
0,1 à 10 g de substances aromatisantes et/ou
0,1 à 7 g d'acide citrique et/ou
0,1 à 6 mg de quinine.

2. Boisson rafraîchissante selon la revendication 1, caractérisée en ce qu'elle contient
0,33 l d'eau
44 g de fructose
23 mg d'acide ascorbique
5 g de substances aromatisantes
1,7 g d'acide citrique et
4 mg de quinine.

3. Boisson rafraîchissante selon les revendications 1 ou 2, caractérisée en ce que l'eau est une eau minérale plate ou contenant du gaz carbonique.

4. Boisson rafraîchissante selon l'une quelconque des revendications 1 à 3, caractérisée en ce qu'elle contient comme substances aromatisantes des substances aromatisantes naturelles, par exemple du pamplemousse, du citron ou d'orange, seules ou en mélange.

5. Boisson rafraîchissante selon l'une quelconque des revendications 1 à 4, caractérisée en ce qu'elle contient comme acide citrique un acide citrique naturel.
